Europäisches Patentamt

European Patent Office

Office européen des brevets

(11) Publication number: **0 370 927**
**A2**

## EUROPEAN PATENT APPLICATION

(21) Application number: **89420460.1**

(22) Date of filing: **22.11.89**

(51) Int. Cl.5: **G06F 11/22**

(30) Priority: **23.11.88 US 275184**

(43) Date of publication of application:
**30.05.90 Bulletin 90/22**

(84) Designated Contracting States:
**DE FR GB**

(71) Applicant: **JOHN FLUKE MFG. CO., INC.**
**6920 Seaway Boulevard**
**Everett Washington 98203(US)**

(72) Inventor: **Locke, Thomas P.**
**16603 199 St. Pl. N.E.**
**Woodinville Washington 98702(US)**

(74) Representative: **de Beaumont, Michel**
**1bis, rue Champollion**
**F-38000 Grenoble(FR)**

(54) **Hardware enhancements for improved performance of memory emulation method.**

(57) Addition of a gated buffers which are accessible by the test apparatus microprocessor for receiving status information and the signals on some of the lines of the data bus of a microprocessor-based system under test provides the capacity for self testing, automatic calibration, improved diagnostics of a kernel at low levels of operability and faster operation of the test system.

EP 0 370 927 A2

# HARDWARE ENHANCEMENTS FOR IMPROVED PERFORMANCE OF MEMORY EMULATION METHOD

## Cross-reference to Related Applications

This application is related to concurrently filed KERNEL TESTING INTERFACE AND METHOD FOR AUTOMATING DIAGNOSTICS OF MICROPROCESSOR-BASED SYSTEMS by J. Polstra, M. Scott and B. White and AUTOMATIC VERIFICATION OF KERNEL CIRCUITRY BASED ON ANALYSIS OF MEMORY ACCESSES by J. Polstra, and APPARATUS, METHOD DATA STRUCTURE FOR VALIDATION OF KERNEL DATA BUS, B. White, J. Polstra and C. Johnson, assigned to the assignee of the present invention.

## Technical Field

The present invention relates generally to the testing and troubleshooting of microprocessor-based electronic systems and more particularly to testing and troubleshooting of the kernel of microprocessor-based electronic systems using memory emulation technique.

## Background of the Invention

With the wide use of complex microprocessor-based systems in both consumer and industrial products, automation of testing and diagnosis of circuit faults, particularly of the kernel of such systems, has become extremely desireable. The kernel of such a system is well-understood in the art to refer to the microprocessor ($\mu$P), itself, and the associated elements with which it is necessary for the microprocessor to correctly interact to function correctly, specifically the memory, clock, address bus and data bus. So-called emulative testers in which an element of the kernel is emulated by the testing apparatus have become popular for functional testing because they enable detailed diagnostics of the kernel even where the kernel is not even minimally operative.

One type of emulative tester is a microprocessor emulator, exemplified by the tester described in U. S. patent 4,455,654, issued to K. S. Bhaskar et al and assigned to the John Fluke Mfg. Co., Inc.; In that system, connection is made to the UUT by removing the UUT $\mu$P and connecting the test system through the $\mu$P socket of the UUT.

Another type of emulative tester is a ROM (or memory) emulator. ROM emulation is deemed desireable since the ROM is in direct communication with the UUT data and address buses and the pin configurations of ROM sockets are relatively simple. ROM emulators are well known for use in software design and operational verification of the $\mu$P but have only recently been used for fault detection and diagnosis because no sync signal is typically available to synchronize the test equipment with the test results it receives. A solution to this problem is disclosed in U. S. Patent Application 07/158,223, of M. H. Scott et al, filed February 19, 1988, for MEMORY EMULATION METHOD AND SYSTEM FOR TESTING AND TROUBLESHOOTING MICROPROCESSOR-BASED ELECTRONIC SYSTEMS, and is hereby fully incorporated by reference herein. That test system comprises a $\mu$P-based mainframe and an interface pod which also includes a $\mu$P-based system which is connected to both the $\mu$P and the memory socket of the UUT. The interface pod includes special logic circuitry connected to the UUT $\mu$P to provide a fine resolution sync signal pulse during a bus cycle of interest in order to provide full troubleshooting fault isolation that is as effective as that provided by prior art $\mu$P emulation since the high resolution sync pulse derived from the $\mu$P can be used to isolate and evaluate signals monitored from the address and data buses at the memory socket with the same facility as they could be from $\mu$P connections. Also, as disclosed in that application, ROM emulation may be generalized to memory emulation (e.g. the emulation of any memory or portion of memory) since the trend in $\mu$P-based systems is to increase RAM while reducing ROM and possibly eliminating ROM altogether by substituting RAM. Therefore test systems must be adequately generalized to test systems not yet produced but, nonetheless, foreseeable in light of current trends in electronic microprocessor-based system architecture.

It has also long been recognized in the art that providing self-test capability is needed in any piece of testing or diagnostic equipment and, indeed, in most complex or data processing electronic apparatus. This need is especially felt in diagnostic equipment for $\mu$P-based systems since the equipment being tested is subject to damage during testing by the application of improper signals to the UUT and also because faulty test equipment may report a functional UUT as faulty, resulting in considerable expense due to needless downtime and lost time in trying to effect an unnecessary repair. As test equipment has become more complex, however, it has often been impractical or impossible to provide full self-test capability without making the complexity and cost of the test apparatus wholly disproportionate to the value of the devices to be tested.

Another long-recognized need in testing and diagnostic equipment is the capacity for self-calibration for properly evaluating the test results captured by the test equipment. As more types and newer generations of $\mu$P's with complex electrical specifications and internal processing techniques reach the market in various systems, the time spent by the operator in identifying the $\mu$P and recalibration of the test equipment to accommodate the particular $\mu$P in the UUT has become increasingly more significant in the overall cost of conducting a test. Similarly, the necessary level of skill of the operator to perform such a function has correspondingly increased and potentially limits the market for such test equipment.

It has also been realized that a comparative weakness of memory emulation as compared to $\mu$P emulation is that it is desireable, when testing non-functional or marginally functional kernels, to be able to determine whether data read from memory actually reached the $\mu$P over the data bus. For instance, after reset of the $\mu$P, data will be read from the first location in the boot memory space and placed on the data bus. Previously, with memory emulation, receipt of that data by the $\mu$P relied on the ability of the $\mu$P to place that data on the address bus, which operation could be prevented by numerous conditions, such as an improper signal on the $\mu$P HOLD or INTR lines, inoperative $\mu$P, faults on the data bus, and the like. Since it is desireable to automate as much of the test procedure as possible, it is also desireable to automate the test procedure under the condition of non-functional or marginally functional kernels as well.

Further, both as a matter of the cost of conducting tests with a particular piece of equipment and as a matter of convenience and user confidence, speed of operation is an important attribute of any test instrument and increased data acquisition speed is desireable.

As disclosed in the above noted copending application, KERNEL TESTING INTERFACE AND METHOD FOR AUTOMATING DIAGNOSTICS OF MICROPROCESSOR-BASED SYSTEMS, by Polstra et al, which is hereby fully incorporated by reference, a highly automated testing and diagnostics system has been provided in which the self-test capability, faster performance and the ability to test kernels at an even lower level of operability provided by this invention are of particular value.

Objects of the Invention

It is, therefore, an object of this invention to provide an enhancement for testing and diagnostic equipment which provides self-test capability for all major functional elements of the testing system.

It is another object of this invention to provide an enhancement for testing and diagnostic equipment which provides automatic calibration to accommodate a wide variety of $\mu$P's in $\mu$P-based systems to be tested.

It is another object of this invention to provide an enhancement for testing and diagnostic equipment which provides improved diagnostics of non-functional and marginally functional system kernels.

It is yet another object of this invention to provide an enhancement for testing and diagnostic equipment which provides improved speed of data capture and test performance.

It is a particular object of the invention to provide the above-enumerated enhancements in the method and apparatus disclosed in the above noted copending application entitled KERNEL TESTING INTERFACE AND METHOD FOR AUTOMATING DIAGNOSTICS OF MICROPROCESSOR-BASED SYSTEMS by J. Polstra, M.Scott and B. White (Polstra et al).

Disclosure of the Invention

The invention is directed to an apparatus for testing microprocessor-based systems having a kernel including a microprocessor by memory emulation, including a gated data buffer coupled to at least one data bus line at the input of said microprocessor, a gated status buffer means coupled to at least one external connection of said microprocessor which carries a signal indicative of the operational status of said microprocessor and a synchronization signal generator responsive to the signal on the external connection of said microprocessor for generating a synchronization signal for controlling the acceptance of signals by both of the gated buffers. This combination of structure provides improved kernel diagnosis capability at low operational levels of the $\mu$P and inoperative kernels, self test-capability, self calibration and improved speed of signal capture.

The invention also comprehends an apparatus for calibrating testing apparatus for microprocessor-based systems having a kernel including a microprocessor and a data bus by memory emulation, comprising apparatus for storing a predetermined bit pattern in an emulation memory, a reset overdiving circuit for causing the microprocessor to command placement of the predetermined bit pattern on the data bus and means for counting bus cycles of the microprocessor subsequent to a READ operation and prior to the appearance of the predetermined bit pattern on said data bus. A synchronization circuit generates a synchronization signal a number of bus cycles after each microprocessor command equal to the number of bus cycles counted. The invention also comprehends a method for calibrating testing apparatus for microprocessor-based systems having a kernel including a microprocessor and a data bus by memory emulation, comprising the steps of storing a predetermined bit pattern in an emulation memory, causing the microprocessor to command placement of the predetermined bit pattern on the data bus, counting bus cycles of the microprocessor subsequent to a READ operation and prior to the appearance of the predetermined bit pattern on the data bus and generating a synchronization signal a number of bus cycles after each microprocessor command equal to the number of bus cycles counted.

The invention further includes a self-test circuit means comprising a gated data buffer circuit means and a gated status buffer circuit means, and a self-test connector means for connecting the sync module and the memory module to an input/output port of said apparatus to permit the testing apparatus to self-test all of its elements including the sync module.

These and other objects of the invention will become evident to those skilled in the art from the following detailed description of the invention with reference to the accompanying drawings.

Brief Description of the Drawings

Figure 1 is an illustration of the testing apparatus incorporating this invention.

Figure 2 is a simplified block diagram of the invention.

Figure 3 is a detailed block diagram of the overall system as shown in figure 2.

Figure 4 is a detailed block diagram of the implementation of this invention in the system of figure 3.

Best Mode of Practicing the Invention

Overview

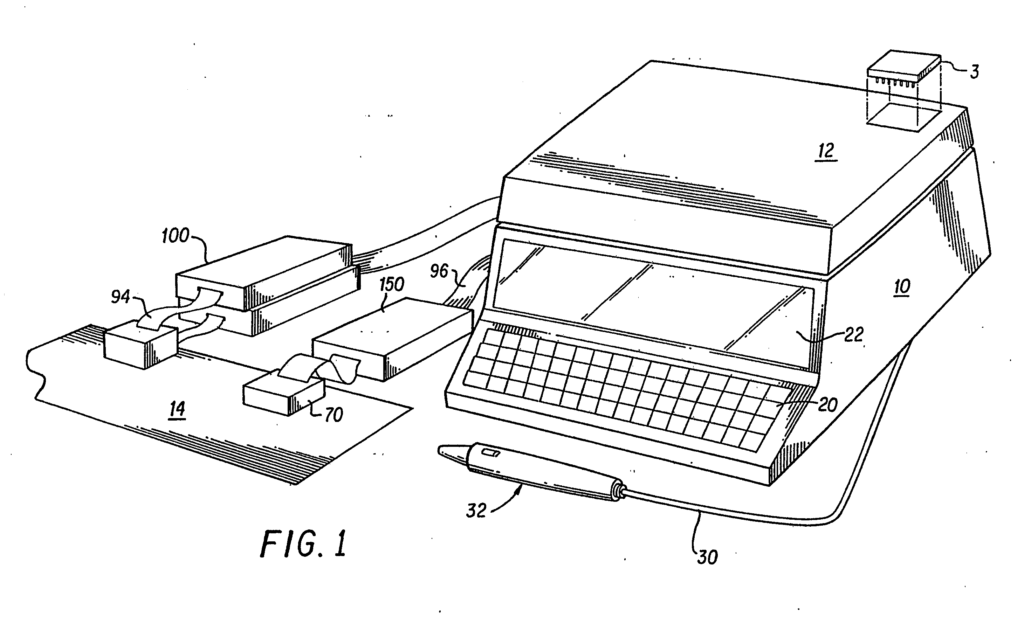

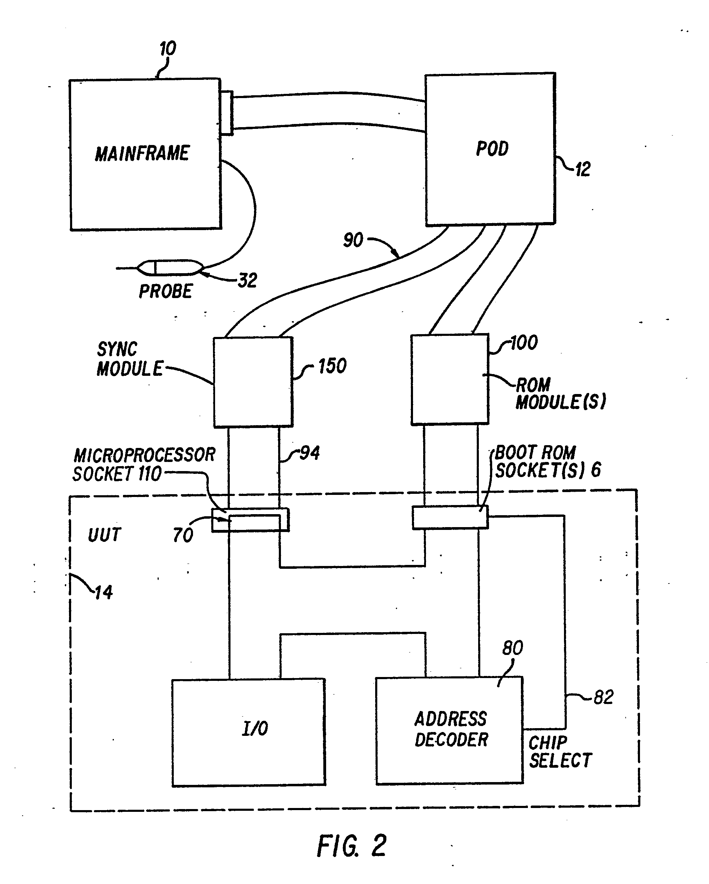

As an overview of the invention, with reference to Figure 1, test apparatus connected to a UUT 14 includes a mainframe processor 10, arranged in a compact housing and including a keyboard 20, probe 32 and display 22, an interface pod 12, a sync module 150 including a sync module adapter 150 and at least one memory module 100 (two being illustrated) depending upon the memory configuration of the UUT 14. The memory module(s) connect to the UUT by a multi-conductor cable 92 and a plug corresponding to the UUT memory socket 72. Figure 2 schematically illustrates the interconnection of the system shown in figure 1, showing the preferred arrangement of the apparatus in a plurality of housings. It is to be understood that the particular articulation of the elements of the system while being preferably as shown for the convenience of the operator could be packaged in more or fewer elements than shown. For instance, the pod could be entirely included within the same housing as the mainframe. It is also to be noted in Figure 2 that while the memory module is electrically substituted for the UUT memory, either by physical replacement or by parallel connection while disabling the UUT memory, the sync module is connected to the μP which is left in place in the UUT circuit.

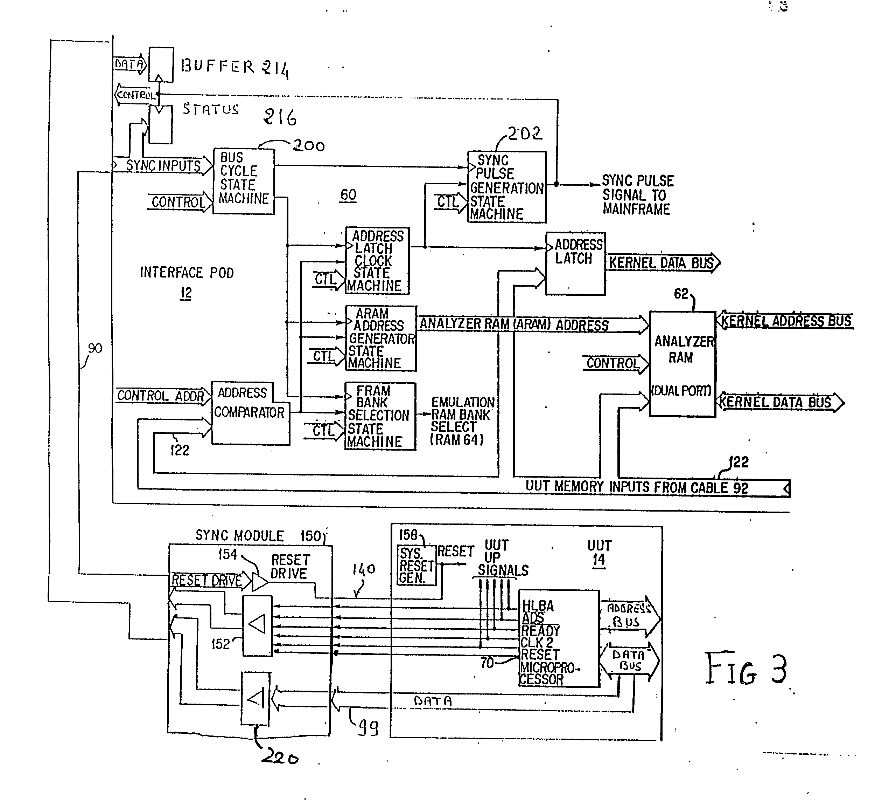

The inclusion of two features of the invention is shown in Figure 3, specifically the inclusion (as compared to the apparatus disclosed in the above incorporated KERNEL TESTING INTERFACE AND METHOD FOR AUTOMATING DIAGNOSTICS OF MICROPROCESSOR-BASED SYSTEMS) of additional buffers 220 within the sync module 150.

These additional buffers may actually be otherwise unused buffers already present in the sync module. In either case, the additional buffers, in accordance with the invention, are connected to data bus pins of the UUT μP over connector 94, which is preferably a ribbon cable but may be flying leads similar to reset, sync, clock and forcing pin connections shown at 140 of figure 3. According to the invention, gated buffers are provided for data inputs to the pod at 214 and status inpus to the pod at 216 which are delivered from the sync module over cable 90.

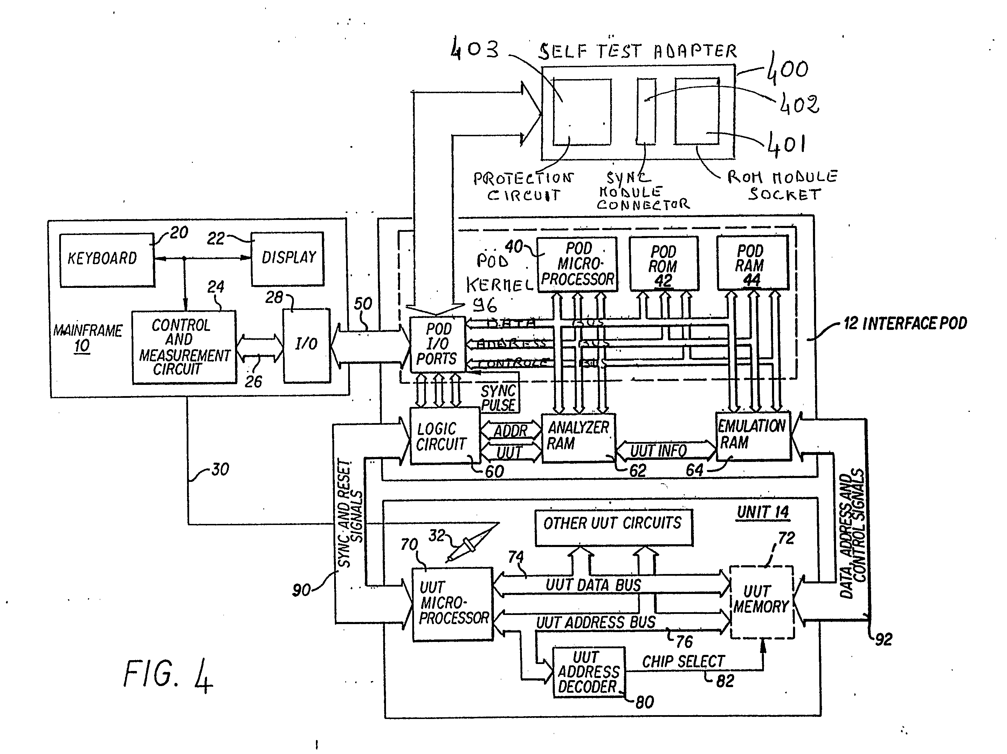

Turning briefly to Figure 4, an additional feature of the invention in which the connection of the self-test adapter 400, including protection circuits 403, sync module connector 402 and memory module socket 401 is illustrated. For performing a self-test of the system, the memory and sync modules will be connected to the self-test adapter rather than a UUT.

Detailed Description

With the above brief overview of the invention in mind, operation of the system will be reviewed as a background for understanding the operation of the enhancements constituting the invention.

The testing system includes a plurality of novel procedures including a bus test primitive, a data stimulus primitive and an address stimulus primitive, which will be individually summarized below. Each of these primitives has utility for testing a particular portion of the kernel of a μP-based system and when utilized in a sequence according to the invention permit a higher degree of automated testing and diagnostics at higher speed and with greater operator convenience than has heretofore been available.

The bus test primitive is executed by a program in the mainframe of the test apparatus. The main function of the bus test primitive is to determine if the $\mu$P is able to perform basic read and write operations in the kernel and can consist of as little as a single read and write. If successful, it will be known that the $\mu$P is at least capable of accessing the memory, in this case, the emulation memory, receiving a bit pattern over the data bus and placing that bit pattern on the address bus where it can be received and monitored by the pod. Since the testing apparatus performs diagnostics of the data and address buses by the development of signatures, however, in the preferred embodiment, the bus test primitive is implemented as a program which is designed to exercise the portion of the data and address buses which correspond to the boot memory. Whether implemented as a single operation or a sequence of operations, it is significant that the bus test primitive is not exhaustive of the lines comprising the data and address buses or even of the combinations of bits which can be placed on those lines or portion of those lines and can thus function rapidly as a go/no go test.

By verifying, rather than fully testing, the functionality of a group of bus lines, other primitives and the reporting of results and the obtaining of results from the chip select line are facilitated, in keeping with the noted bootstrapping technique wherein the procedure is performed upon and monitored from the smallest portion of operational sructure which has been tested or verified at that point in the test procedure. It is important from the user's point of view that no probing is required for the bus test. The data stimulus primitive is implemented at a lower level of operability of the $\mu$P than the bus test primitive, Specifically by repeatedly resetting the $\mu$P; which function will have been tested prior to execution of the bus test primitive. Upon reset, the $\mu$P accesses the first location in the boot memory and retrieves the bit pattern stored there. The data stimulus is not a program but is executed by altering the bit pattern in the first location of the boot memory for each reset. It is significant to note that this function is common to both the so-called vectored reset and execute-on-reset types of microprocessors. With either type of $\mu$P, the bit pattern retrieved from memory will be communicated over the data bus and will appear on the address bus. During reset, a sync pulse is generated by the $\mu$P during the initial reading of the first location of the boot memory which is cartured by the sync module, communicated to the pod and used to evaluate signals appearing on the data bus, either by probing to collect data bus line signatures, or, preferably by verification of the data bus rather than testing. This is done by a procedure similar to the bus test using an exhaustive data stimulus sequence of bit patterns while monitoring the chip select line. The data stimulus sequence is exhaustive in the sense that it consists of a series of essentially arbitrary patterns which are, nevertheless, chosen such that a unique signature will be generated on each line of the data bus. As noted in the description of the bus test primitive, done on the memory bootspace, the chip select line (which is a logic function of the high-order bits on the address bus) will reflect an error only if one or more of the high-order bits is non-zero as is expected when cycling through boot space locations and the go/no go test will be passed even if one or more of the high order bus lines are tied to ground. In the same way, the presence or absence of a chip select signal as expected while performing the data stimulus sequence will reflect whether or not one of the high order lines is latched (e.g. shorted to ground). If this test is passed, only tied line defects, where a line of the data bus is tied to another data bus line, will remain. This can be later diagnosed by probing or, preferably by automatic diagnosis after address bus testing, which has been made possible by verification of the data bus$\mu$

After verification of the data bus, testing of the address bus may be conducted using the same stimulus sequence as for the data stimulus primitive. However, this is done by conducting a programmed sequence of read/write instructions using these bit patterns and collecting signatures either with a probe, or preferably, in an analysis memory from which latched or tied lines may be deduced. As pointed out above, an exhaustive test of the address lines may be conducted using only the limited number of bit patterns in the stimulus sequence. Once the address bus lines have thus been fully diagnosed, full diagnosis of the data lines will be possible since any defect appearing on the databus lines will also be reflected on the address bus lines. Since the address bus lines have been fully diagnosed, any fault noted will be isolated to a particular bus. It is helpful to note that for execute-on-reset processors, the program for performing the address stimulus primitive can be a single instruction. For vectored reset processors, which look to the boot location address for the address of the first instruction, the address stimulus primitive typically requires no instructions at all; the desired bit pattern is merely placed into the emulation memory at the reset vector location.

To recapitulate the above summarized primitives in the context of the overall system and method, when it is desired to perform a test of the

kernel of a $\mu$P-based system, an emulation memory is electrically substituted for the memory of the unit to be tested and a sync module is connected to timing information and forcing pins of the $\mu$P by conductors 140 (Figure 3). When the test procedure is initiated, certain checks are made to ascertain that power is provided to elements of the kernel as will be enumerated in greater detail below. Then a reset overdrive check is performed to determine if the pod can, in fact, initiate a reset of the $\mu$P and is monitored by the sync module to determine if the reset line first goes active and then inactive. The actual reset of the $\mu$P is not checked in this step but only that a signal which should be capable of doing so is present at the appropriate pin of the $\mu$P.

Next, the sync module captures the clock signal of the $\mu$P which is evaluated. If the $\mu$P clock signal is not received by the pod, additional checks are made of the clock to determine if it is slow or shorted and for unexpected values of the signals on the forcing lines.

At this point, no tests have been performed on the $\mu$P itself but signals have been verified sufficiently to determine that such tests may now be done. The most rudimentary of these tests, the $\mu$P reset, is now done by overdriving the reset line and looking for a chip select signal on the chip select line corresponding to the boot memory location from address decoder 80. If successful, the $\mu$P will again be reset for the purpose of checking for the correct signal on the low order lines of the address bus to access the first location of the boot memory. This procedure will now have verified sufficient functionality of the kernel to proceed with the sequence of the bus test, and the sequence of data and address stimulus primitives as outlined above. It should be noted also that if any test conducted thus far has indicated a defect, a particular kernel fault will have been unambiguously indicated without requiring any more complex or high level function from the $\mu$P than reset. The bus test as outlined above, in its first (and possibly only) cycle will verify the only further function necessary to fully test and diagnose the remainder of the kernel: a read and write operation. It should also be kept in mind that because of the high resolution sync pulses produced by the sync module, bus cycles of interest can be isolated and evaluations of the buses can be conducted according to the signatures produced in response to the stimulus patterns imposed to exercise the lines. Since, for example, only twelve bit patterns, as disclosed in the Polstra et al application, incorporated supra, are necessary in a stimulus primitive in order to exercise thirty-two lines in a bus to develop a unique signature for each line for fully diagnosing the bus, significant increases in testing speed can be achieved.

In accordance with the invention and with reference again to figure 3, conductors 140 are connected to the reset line and other lines on which signals reflecting the operational state (status pins) of the UUT $\mu$P will appear. For example, on the 80386 processor, these lines will be the HOLD, HLDA (hold acknowledge), ADS, READY, CLK², and RESET lines. These signals will be received by buffers 152 over lines 140 and transmitted to the pod over cable 90 as inputs to bus cycle state machine 200. Bus cycle state machine 200 will perform a logical operation on these signals, under control of the mainframe 10, to develop a control signal for controlling sync pulse generation state machine 202 which generates a sync signal in response thereto. This sync signal is sent to mainframe 10 which generates control signals therefrom which are returned to various parts of the pod as illustrated, notably the analyzer RAM 62. The sync signal also directly controls the gated buffers 214 and 216. Since, as pointed out above, gated buffer 216 will receive in real time the signals appearing on the $\mu$P status pins, the sync signal will cause the gated buffer 216 to function as a sample-and-hold circuit to capture the instantaneous status of the $\mu$P when a sync signal is generated. This function has special use in the diagnosis of a faulty $\mu$P or improper states of forcing lines as well as insuring correct connection of leads 140 and self-calibration for different $\mu$P types.

Similarly, since lines 94 connect to the data bus connections to the $\mu$P, through buffers 220 and cable 90 to the data gated buffer 214, gated buffer 214 will also act as a sample-and-hold circuit for the states of data bus outputs. The contents of the two gated buffers 214 and 216 thus provide a much more efficient path to the pod $\mu$P.

After the UUT $\mu$P executes a READ, the bits appearing as input to the UUT $\mu$P from the data bus will also appear in gated buffer 214 where the pod $\mu$P can access them as part of the READ operation. Therefore, the UUT $\mu$P need not perform a WRITE to return the bit patterns to the pod. It should be noted that it is not necessary to diagnose all data bus lines in this manner or provide a gated buffer for all data lines since it improves the diagnostic funtion of the test apparatus to test and diagnose any number of lines rather than only verifying their functionality. In the preferred embodiment, as a compromise between performance and increased hardware, the gated buffer 214 monitors only eight data lines since, as disclosed in Polstra et al, supra, if these can at least be verified, the remainder will be diagnosed by the address and data stimulus primitives. In this case, full automated diagnostics of those eight data lines can be accomplished instead of only verification of their functionality. Also, this feature operates optimally

with eight bit μPs since μPs with sixteen or more data lines require multiple WRITES to return data.

Additionally, the data gated buffers 214 permit the automatic calibration of the pod for the bus cycle after reset in which bit patterns of the stimulus primitives can be expected to appear. This is done simply by doing a UUT write of known data and then determining the bus cycle count after reset when the data in gated buffer 214 matches the write data and adjusting the sync count accordingly to place the sync pulse in the correct bus cycle.

Further, by providing an alternative path for bit patterns to the pod, kernel diagnostics are improved for non-functional and marginally functional kernels since it can immediately be determined if data read from the emulation memory actually reached the μP. The data bus can be fully diagnosed even if the UUT μP is completely non-functional since bit patterns can be placed on the data lines by the emulation memory alone.

As shown in figure 4, a pod input/output port is provided for a self-test adapter 400. The self-test adapter contains protection circuits to prevent operator hazards and includes two connectors to receive connectors of the sync module and the memory module. When these connections are made to the self-test adapter instead of a UUT, the pod μP sees the emulation memory as the UUT memory and the emulation memory sees the pod μP as the UUT μP. This connection, in combination with the storage provided by gated buffers 214 and 216 serving to separate cycles of input and output, all elements of the testing system, including the sync module, can be made to self-test since the pod itself is a μP-based system. When this is done, it is useful to enable the pod μP to be capable of overriding sync pulse generation either at bus cycle state machine 200 or at sync pulse generation state machine 202 to provide greater control of the storage period of the gated buffers.

In summary, the inclusion of gated buffers coupled to some of the status pins and some of the data pins provides the test apparatus the capability of faster transfer of data from the data bus to the test apparatus microprocessor, the capability of diagnosing the data bus automatically even when the UUT μP is non-functional and the capability for self-calibration of the test apparatus. With the further provision of a connector for coupling the emulation memory connector and the microprocessor connector to an input/output port of the test apparatus, the addition of gated buffer enable a full self-test of the testing apparatus including the sync module. If deemed necessary or desireable in view of the length of connecting cable utilized, buffers may be used in the lines connected to the data bus connection pins of the μP.

Having thus fully described the invention in detail it will be appreciated that many variations and modifications will be apparent to persons skilled in the art without departing from the spirit and scope of the invention. The detailed description set forth above is intended as being by way of example and not of limitation; the scope of the invention being limited only by the appended claims.

## Claims

1. For use in an apparatus for testing microprocessor-based systems having a kernel including a microprocessor by memory emulation, a buffer circuit means comprising
gated data buffer means coupled to at least one data bus line at the input of said microprocessor,
gated status buffer means coupled to at least one external connect ion of said microprocessor which carries a signal indicative of the operational status of said microprocessor and synchronization signal generation means responsive to said signal on said at least one external connection of said microprocessor for generating a synchronization signal for controlling the acceptance of signals by both said gated data buffer means and said gated status buffer means.

2. The buffer circuit means according to claim 1, wherein
said gated data buffer means and said gated status buffer means are coupled to said microprocessor by coupling means including respective conductor means in a common cable.

3. The buffer circuit means according to claim 2, wherein
said coupling means includes a respective buffer means for each said conductor means.

4. The buffer circuit means according to claim 3, further including
a test system evaluation means for evaluating signals captured by said test apparatus and means for coupling at least said gated data buffer means to an input of said test system evaluation means.

5. The buffer circuit means according to claim 3, wherein
said test system evaluation means is a microprocessor.

6. An arrangement for calibrating apparatus for testing microprocessor-based systems having a kernel including a microprocessor and a data bus by memory emulation, comprising
emulation memory means,
means for loading a selected bit pattern into a predetermined location in said emulation memory means,
means for causing said microprocessor to access said preselected location of said emulation memory whereby said emulation memory is caused to place said preselected bit pattern on said data bus, synchronization signal generation means including means for comparing a postion of signals appearing on said data bus with a portion of said preselected bit pattern and bus cycle counting means for counting bus cycles prior to when said comparison means detects a bit pattern on said data bus matching said portion of said preselected bit pattern and means for producing a syncronization signal a number of bus cycles after further access of said emulation memory equal to the number of bus cycles counted by said counting means.

7. A method for calibrating apparatus for testing microprocessor-based systems having a kernel including a microprocessor and a data bus by memory emulation, comprising the steps of storing a predetermined bit pattern in an emulation memory, causing said microprocessor to command placement of said predetermined bit pattern on said data bus, counting bus cycles of said microprocessor subsequent to said causing step and prior to an appearance of said predetermined bit pattern on said data bus, and generating a synchronization signal a number of bus cycles after each microprocessor command, said number being equal to the number of bus cycles counted in said counting step.

8. For use in an apparatus for testing by memory emulation a microprocessor-based systems having a kernel including a microprocessor, and including connection means to connect an emulation memory to said system and further connection means for connection to at least one status pin and one data input pin of said microprocessor, a self-test circuit means comprising a gated buffer circuit means including a gated data buffer circuit means and a gated status buffer circuit means, and connector means for connecting said connection means and said further connection means to an input/output port of said apparatus.

FIG. 1

EP 0 370 927 A2

FIG. 2

FIG 3

FIG. 4

SELF TEST ADAPTER 400

403 — PROTECTION CIRCUIT
402 — SYNC MODULE CONNECTOR
401 — ROM MODULE SOCKET

MAINFRAME 10

KEYBOARD 20

DISPLAY 22

CONTROL AND MEASUREMENT CIRCUIT 24

I/O 28

50

POD I/O PORTS

POD KERNEL 96

POD MICRO-PROCESSOR 40

POD ROM 42

POD RAM 44

12 INTERFACE POD

DATA BUS
ADDRESS BUS
CONTROL BUS

SYNC PULSE

LOGIC CIRCUIT 60

ADDR
UUT

ANALYZER RAM 62

UUT INFO

EMULATION RAM 64

SYNC AND RESET SIGNALS

90

30

26

OTHER UUT CIRCUITS

UNIT 14

70

32

UUT MICRO-PROCESSOR

74

UUT DATA BUS

UUT ADDRESS BUS

76

UUT MEMORY 72

UUT ADDRESS DECODER 80

CHIP SELECT 82

DATA, ADDRESS AND CONTROL SIGNALS

92

EP 0 370 927 A2